## Europäisches Patentamt
## European Patent Office
## Office européen des brevets

(19)

(11) Numéro de publication: **0 165 093**
**A1**

(12)

# DEMANDE DE BREVET EUROPEEN

(21) Numéro de dépôt: **85400808.3**

(22) Date de dépôt: **24.04.85**

(51) Int. Cl.⁴: **B 27 N 3/28**
B 29 C 47/10, B 29 C 47/40
B 29 C 47/64
//B29K103:00

(30) Priorité: **27.04.84 FR 8406643**

(43) Date de publication de la demande:
**18.12.85 Bulletin 85/51**

(84) Etats contractants désignés:
**BE DE FR GB IT NL SE**

(71) Demandeur: **CLEXTRAL**
**Tour Fiat 1 place de la Coupole**
**F-92400 Courbevoie(FR)**

(72) Inventeur: **Duperrier, Pierre**
**Lotissement Chantalouette**
**F-42480 La Fouillouse(FR)**

(74) Mandataire: **Moncheny, Michel et al,**
**c/o Cabinet Lavoix 2 Place d'Estienne d'Orves**
**F-75441 Paris Cedex 09(FR)**

(54) **Procédé de fabrication d'un produit composite constitué d'un mélange de particules cellulosiques et d'un liant thermoplastique.**

(57) L'invention a pour objet un procédé et un appareil de fabrication d'un produit composite constitué d'un mélange de particules celluosiques et d'un liant thermoplastique.

Selon l'invention, on introduit les particules (5) à l'extrémité amont d'une machine d'extrusion, puis on introduit, dans la partie médiane de ladite machine d'extrusion, le liant thermoplastique (6) préalablement fondu et l'on réalise successivement, à l'intérieur du fourreau (1) et de l'amont à l'aval dans le sens de transport de la matière le séchage, la désagrégation et le chauffage à l'abri de l'air des particules cellulosiques, l'introduction progressive du liant (6) avec un débit dosé en fonction de celui des particules cellulosiques.

L'invention couvre également le produits constitués de pièces extrudées massives telles que des plots de palettes de transport.
(Figure 2).

Fig 2

EP 0 165 093 A1

" PROCEDE DE FABRICATION D'UN PRODUIT COMPOSITE CONSTITUE D'UN MELANGE DE PARTICULES CELLULOSIQUES ET D'UN LIANT THERMOPLASTIQUE ".

L'invention a pour objet un procédé de fabrication d'un produit composite constitué d'un mélange de particules ligno-cellulosiques et d'un liant thermoplastique, et couvre également un appareil de fabrication d'un tel produit.

On connaît des procédés de préparation de mélange de particules cellulosiques et d'un liant permettant de réaliser des produits analogues au bois dont ils possèdent certaines propriétés et notamment l'aptitude au sciage et au clouage. Généralement, le bois, se présentant sous forme de sciure, est mélangé à un liant thermodurcissable qui agit comme un adhésif pour assurer la solidarité des particules de bois. Pour fabriquer ces produits, il faut donc tout d'abord préparer un mélange de sciure et de liant thermodurcissable puis le mettre en forme et le soumettre à l'action de la chaleur pour durcir le liant. Jusqu'à présent, on a fabriqué surtout des panneaux dont l'épaisseur est d'ailleurs relativement limitée. Le liant thermodurcissable présente l'avantage de pouvoir être mélangé à froid mais il nécessite de ce fait un chauffage postérieur pour faire durcir le produit, ce qui complique le procédé.

On peut envisager d'utiliser comme liant une matière thermoplastique qui ne nécessite pas un

- 2 -

chauffage postérieur à la mise en forme du produit. Cependant, le mélange doit se produire à chaud pour que la matière thermoplastique soit fondue et, si cette opération ne présente pas dé difficulté particulière avec des additifs tels que, par exemple, la fibre de verre, il n'en est pas de même avec le bois qui ne supporte pas des températures élevées, par exemple de l'ordre de 200°C.

En outre, les mélanges à base de liant thermoplastique réalisés jusqu'à présent pour fabriquer des produits en continu ou moulés ne comportaient pas plus de 50% de charge ligneuse. Or le prix de revient du produit est lié essentiellement à la proportion de liant, celui-ci étant relativement onéreux.

Par ailleurs les produits réalisés actuellement à partir de tels mélanges d'un liant plastique et de sciure de bois sont surtout des panneaux ou des objets moulés d'épaisseur assez faible. Or il serait intéressant de réaliser des objets massifs de dimensions relativement importantes avec des produits fortement chargés.

C'est le cas par exemple des plots entretoises utilisés pour la fabrication de palettes de transport de charges. Celles-ci sont, on le sait, constituées d'un platelage en planches clouées sur des plots entretoises permettant de laisser entre le platelage et le sol un espace suffisant pour le passage des fourches d'un chariot élévateur. Ces plots sont, jusqu'à présent, réalisés en bois, ce qui leur permet d'être assemblés par clouage mais de tels plots ne sont pas d'un prix négligeable.

L'invention a pour objet un procédé permettant de réaliser facilement des produits en matière composite à base de particules de bois et ayant cependant une section importante.

Conformément à l'invention, on introduit les particules cellulosiques à l'extrémité amont de la machine d'extrusion, puis on introduit dans la partie médiane de ladite machine d'extrusion le liant thermoplastique préalablement fondu et l'on réalise successivement, à l'intérieur du fourreau et de l'amont à l'aval dans le sens de transport de la matière, le séchage, la désagrégation et le chauffage à l'abri de l'air des particules cellulosiques, l'introduction progressive du liant avec un débit dosé en fonction de celui des particules cellulosiques.

On peut ainsi réaliser, selon l'invention, un produit composite constitué d'un boudin extrudé pouvant avoir une largeur de l'ordre d'une dizaine de cm et pouvant être scié en tronçons susceptibles de constituer des plots entretoises pour la fabrication de palettes.

Dans un mode de réalisation préférentiel, le liant thermoplastique est fondu à l'intérieur d'une

- 4 -

seconde extrudeuse alimentée en particules thermoplastiques solides et débouchant à l'intérieur du
fourreau de l'extrudeuse de préparation du mélange par
un orifice placé dans la partie médiane de celui-ci.

L'invention va maintenant être décrite avec
plus de détails en se référant à un mode de réalisation
particulier, donné à titre d'exemple et représenté
sur les dessins annexés.

La Fig. 1 représente schématiquement,
en coupe longitudinale, selon I-I de la Fig. 2, un appareil
de fabrication du produit selon l'invention.

La Fig. 2 est une vue en plan de l'appareil,
en coupe selon II-II de la Fig. 1.

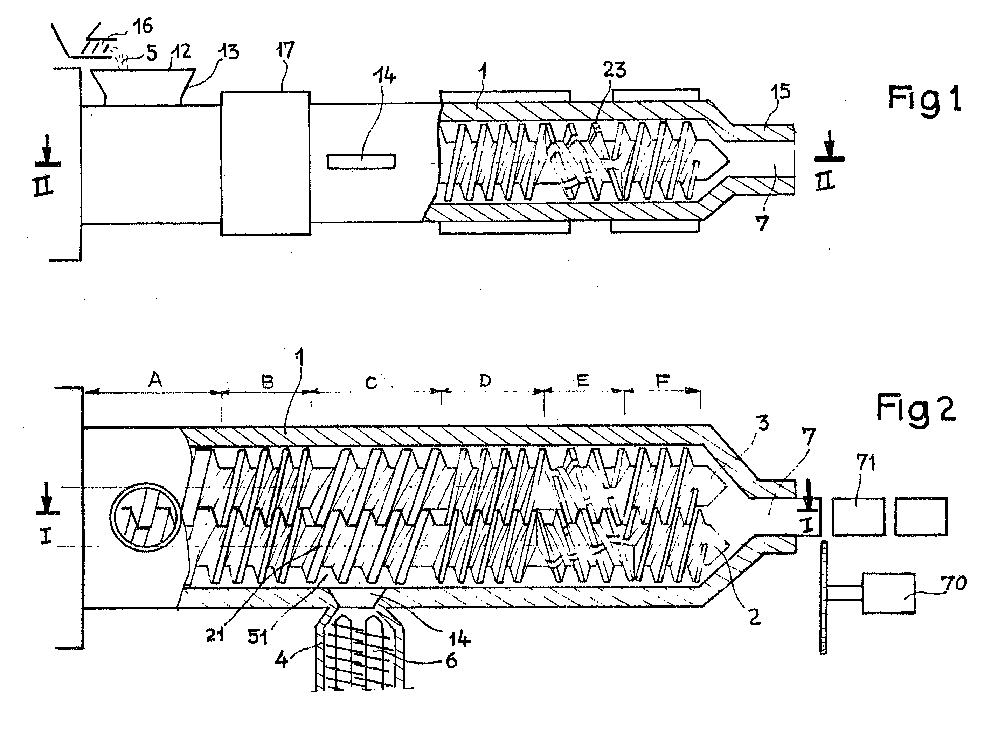

L'appareil de préparation représenté sur
la Fig. 1 comprend essentiellement une extrudeuse à
deux vis limitée par un fourreau allongé 1 enveloppant
deux vis 2 et 3 entraînées en rotation par un groupe
d'entraînement 11. Dans l'exemple préférentiel représenté sur les dessins, les deux vis ont des filetages
identiques et sont entraînées en rotation dans le
même sens. D'autre part, les filetages des vis ont des
pas variés qui déterminent des sections successives,
respectivement une section de transport à pas large A,
une section de tassage B à pas plus resserré, une section
C d'introduction du liant, à pas élargi, une section D
de compression, à pas resserré, une section E de malaxage
à pas inversé et une section F de compression finale à

- 5 -

pas resserré. Le fourreau 1 est muni à son extrémité amont d'un orifice 12 placé dans le fond d'une trémie 13 et, dans la section médiane C, d'au moins un orifice 14 par lequel débouche une seconde extrudeuse 4. A son extrémité aval, le fourreau 1 est muni d'une filière d'extrusion 15.

Selon le procédé, les particules de bois 5 sont déversées dans la trémie 13, par exemple par un doseur à vis 16 qui permet un déversement régulier. L'orifice 12 s'ouvre largement sur les filets 21, 31 des vis 2 et 3 qui entraînent vers l'aval les particules de bois au fur et à mesure de leur déversement. En effet, un transporteur à plusieurs vis présente l'avantage de permettre le transport vers l'aval de la matière introduite même si celle-ci ne remplit pas complètement les filets et se présente sous la forme de particules solides de faibles dimensions. Les particules de bois peuvent ainsi être entraînées vers l'aval sans être comprimées. Elles se répandent le long des filets à pas large de la section A car, grâce à l'utilisation de vis tournant dans le même sens, elles sont entraînées le long de la paroi du fourreau en passant d'une vis à l'autre dans les zones d'engrènement. Cette répartition des particules en couche mince non comprimée le long de la paroi interne du fourreau permet de les soumettre à un chauffage progressif, par exemple au moyen de jaquettes chauffantes 17 entourant le fourreau. Les particules, qui contiennent toujours une certaine proportion d'eau, sont ainsi séchées, la vapeur produite pouvant remonter vers l'amont et sortir par la trémie 12 ou bien par un orifice de dégazage ménagé le long du fourreau. Les particules entraînées remplissent progressivement les filets, dans la section de tassage B dont le pas est resserré. Il en résulte une certaine étanchéité à l'air qui permet de chauffer les particules à une température supérieure à 100°C, pouvant même atteindre 200°C sans risque d'enflammement ou de décomposition du bois. En cas de besoin, on peut d'ailleurs réaliser une étanchéité en amont de la zone de chauffage à haute température, par exemple en faisant passer les particules par une zone à pas resserré qui produit une forte compression de la matière.

Du fait de l'utilisation d'une machine à plusieurs vis, la matière est également soumise au cours de son transport à un malaxage qui produit la désagrégation des particules, d'autant plus facilement que celles-ci sont asséchées.

De la sorte, les particules 51 arrivant dans la partie médiane du fourreau sont bien séchées, désagrégées, et chauffées à une température de l'ordre de 200° correspondant sensiblement à la température de fusion d'un liant thermoplastique, de façon à faciliter le mélange.

Le liant 6 est introduit dans le fourreau 1 au moyen de la seconde extrudeuse 4 qui débouche dans la zone médiane C du fourreau par un ou plusieurs orifices en forme de fente allongée couvrant plusieurs filets d'une vis ou bien des deux vis si l'introduction se fait dans la zone d'engrènement. Dans la zone d'introduction C, les filets ont un pas élargi pour tenir compte de l'augmentation de volume et faire arriver le liant dans une matière décomprimée.

L'extrudeuse 4 d'injection du liant est avantageusement munie elle-même de deux vis engrènant l'une dans l'autre et peut être alimentée en granulés de matière thermoplastique dont on réalise la fusion à l'intérieur du fourreau par chauffage de ce dernier.

En réglant la vitesse de rotation des vis, on peut contrôler le débit d'introduction du liant thermoplastique et par conséquent régler celui-ci en fonction du débit des particules de bois. On introduit donc dans l'extrudeuse exactement la proportion désirée de liant thermoplastique 6. Celui-ci est entraîné vers l'aval par les vis 2 et 3 et se mélange progressivement avec les particules de bois 51 grâce à l'effet de malaxage intense produit par les vis. Pour augmenter cet effet de malaxage, la zone D placée à l'aval de l'orifice d'introduction 14 a un pas resserré et est suivie d'une zone E munie de filets à pas inversé. Il en résulte un effet de freinage de la matière et une mise en compression dans la zone D. Dans la zone E les filets à pas inversé sont avantageusement munis d'ouvertures qui s'étendent radialement entre l'arbre de la vis et la périphérie du filet de façon à permettre le passage vers l'aval d'un débit contrôlé de matière. Ce passage des particules et du liant dans les filets inversés munis d'ouvertures de passage contrôlé vers l'aval augmente considérablement l'effet de malaxage sous pression et permet de réaliser un mélange parfaitement intime du liant avec les particules de bois même si la proportion de liant est faible, par exemple inférieure à 10%. En effet, dans les filets à pas inversé, la matière a tendance à revenir en arrière et le passage vers l'aval se produit essentiellement dans la zone d'engrènement 23 des vis qui sont calées de telle sorte que les ouvertures y arrivent simultanément en coïncidence. Il se produit donc dans cette zone, par la rotation des vis, une ouverture périodique d'un orifice qui laisse passer un certain débit de matière, ce processus se renouvelant à chaque filet à pas inversé. Le mélange est ainsi soumis à un effet combiné de compression et de cisaillement qui permet au liant, même en quantité réduite, de s'incorporer aux particules de bois, chacune de celles-ci étant complètement enrobée de liant.

A la sortie de la zone E à pas inversé, le mélange passe dans une zone F à pas resserré où se réalise une homogénéisation et une mise en compression du mélange permettant de réaliser l'extrusion par la

- 9 -

filière 15.

Comme on l'a indiqué, la partie amont de la machine est munie de jaquettes 17 de chauffage du fourreau permettant de porter la température des particules 5, à 200°C environ, correspondant à la température de fusion du liant 6. Des jaquettes 18 entourant la partie aval du fourreau 1 permettent soit de chauffer le fourreau soit de le refroidir, notamment dans les zones de malaxage D et E où le frottement pourrait entraîner un échauffement excessif du mélange. Par un système de régulation facile à concevoir, on peut ainsi maintenir le mélange à une température de l'ordre de 200°C qui permet de le mettre en forme dans la filière sans risque de décomposition du bois, compte tenu de la pression.

On a constaté que le mélange ainsi réalisé pouvait être extrudé par une filière très large, de l'ordre d'une dizaine de cm. Ainsi, alors que, jusqu'à présent, on réalisait essentiellement des panneaux en bois reconstitué, d'épaisseur limitée, le procédé selon l'invention permet de réaliser un boudin 7 de large section qui, après refroidissement, présente une aptitude au clouage et au sciage comparable à celle du bois, avec une densité analogue. Le boudin extrudé 7 peut donc être scié après la sortie de l'extrudeuse, par exemple par une scie rotative 70

0165093

- 10 -

de façon à réaliser des éléments massifs 71 de longueur voulue. Ces éléments peuvent être par exemple des plots entretoises pour la fabrication de palettes.

Etant donné que les particules de bois sont totalement enrobées dans le liant thermoplastique, le produit obtenu présente directement de bonnes qualités hydrofuges, propriété particulièrement intéressante dans le cas de plots de palettes.

Un avantage très important du procédé réside dans le fait que, contrairement au liant thermodurcissable, le liant thermoplastique peut subir une nouvelle fusion pour être réutilisé. On peut donc récupérer des plots usagés ainsi que les résidus du sciage effectué à la sortie de l'extrudeuse pour les soumettre à un nouveau processus de préparation. De même, la matière plastique 6 introduite sous forme de granulés dans l'extrudeuse de fusion 4 peut être constituée par exemple par des déchets de matière plastique récupérée et broyée à la granulométrie voulue.

Il en est de même du bois qui peut être alimenté sous forme de particules 5 de granulométrie très variée, par exemple des copeaux ou des éclats. En effet, on pourrait placer entre l'orifice 12 d'alimentation en particules de bois et l'orifice 14 d'introduction du liant une zone supplémentaire comprenant des filets à pas inversé munis d'ouvertures radiales et qui permettrait de réaliser un broyage des copeaux de bois pour obtenir des particules ayant la granulométrie voulue. Comme on l'a déjà indiqué, une telle zone à pas inversé réaliserait d'autre part une étanchéité en aval de l'orifice d'alimentation 12 permettant le chauffage des particules à l'abri de l'air.

Mais l'invention pourrait également faire l'objet d'autres variantes et perfectionnements restant dans le cadre de protection revendiqué. C'est ainsi que le produit extrudé massif obtenu à la sortie de la machine pourrait constituer de véritables éléments de construction en bois reconstitué. En outre, on pourrait utiliser un autre processus de mélange pour réaliser, selon l'invention, un boudin extrudé de grande largeur susceptible de constituer des plots de palettes.

- 12 -

- REVENDICATIONS -

1. Procédé de fabrication d'un produit composite constitué d'un mélange de particules cellulosiques (5) et d'un liant thermoplastique (6) au moyen d'une machine d'extrusion comprenant au moins deux vis (2,3) à axes parallèles engrènant l'une dans l'autre et entraînées en rotation à l'intérieur d'un fourreau allongé (1), dans lequel on réalise le mélange intime des particules cellulosiques (5) et du liant thermoplastique (6) caractérisé par le fait que, tout d'abord, on introduit les particules cellulosiques (5) à l'extrémité amont de la machine d'extrusion, puis on introduit, dans la partie médiane de ladite machine d'extrusion, le liant thermoplastique (6), préalablement fondu, et l'on réalise successivement, à l'intérieur du fourreau (1) et de l'amont à l'aval dans le sens de transport de la matière, le séchage, la désagrégation, le chauffage à l'abri de l'air des particules cellulosiques, l'introduction progressive du liant thermoplastique (6) avec un débit dosé en fonction de celui des particules cellulosiques.

2. Procédé de fabrication d'un produit composite selon la revendication 1, caractérisé par le fait que le liant thermoplastique (6) est fondu à l'intérieur d'une extrudeuse (4) alimentée en particules thermoplastiques solides et débouchant à l'intérieur du fourreau (1) de la machine de mélange par un orifice (14) placé dans la partie médiane du fourreau (1).

- 13 -

3. Appareil de fabrication d'un produit composite constitué d'un mélange de particules cellulosiques (5) et d'un liant thermoplastique (6) comprenant une extrudeuse formée par au moins deux vis (2,3), d'axes parallèles engrènant l'une dans l'autre et entraînées en rotation à l'intérieur d'un fourreau (1) dans lequel les deux vis (2,3) réalisent le mélange avec trituration et compression progressive des particules cellulosiques (5) et du liant thermoplastique (6) caractérisé par le fait que le fourreau (1) est muni à son extrémité amont, dans le sens de transport des vis (2) d'un orifice (12) d'introduction des particules cellulosiques (5) et, dans sa partie médiane, d'au moins un orifice (14) d'introduction d'un liant thermoplastique, préalablement fondu, les deux vis étant munies de sections à pas différents déterminant, de l'amont à l'aval, le transport vers l'aval, puis le tassage des particules solides (5) jusqu'à l'orifice d'introduction du liant thermoplastique (6).

4. Appareil selon la revendication 3 de préparation d'un produit composite, caractérisé par le fait que les vis (2,3) de l'extrudeuse comprennent, de l'amont à l'aval, une section A à pas large de transport vers l'aval des particules cellulosiques (5) introduites par l'orifice amont (12), une section B de tassage, à pas resserré, une section C d'introduction du liant thermoplastique (6), à pas élargi pour

- 14 -

tenir compte du volume introduit, une section D à pas resserré, de compression du mélange, une section E à pas inversé de malaxage du mélange, dans laquelle les filets inversés sont munis d'ouvertures de passage contrôlé du mélange vers l'aval et une section F à pas resserré de compression du mélange avant extrusion du boudin (7) par la filière (15).

5. Appareil selon la revendication 3 de préparation d'un produit composite, caractérisé par le fait qu'il comprend une extrudeuse (4) de fusion du liant thermoplastique (6), d'axe transversal à l'extrudeuse de préparation du produit et débouchant à l'intérieur de cette dernière par au moins un orifice (14) placé dans la partie médiane du fourreau.

6. Appareil selon l'une des revendications 3 et 5 de préparation d'un produit composite, caractérisé par le fait que l'orifice (14) d'injection du liant thermoplastique (6) dans le fourreau (1) est constitué par une fente allongée parallèle à l'axe des vis et couvrant au moins deux filets (21) de la zone à pas élargi C d'au moins l'une des vis (2).

7. Produit composite à base d'un mélange de particules cellulosiques et d'un liant thermoplastique constitué d'un boudin extrudé, caractérisé par le fait que le boudin extrudé a une largeur de l'ordre d'une dizaine de centimètres et est scié en

0165093

- 15 -

tronçons susceptibles de constituer des plots entretoises pour la fabrication de palettes de transport.

8. Produit composite selon la revendication 7, caractérisé par le fait que le liant thermoplastique est obtenu par fusion de granulés de manière thermoplastique récupérés et broyés.

Fig 1

Fig 2

Office européen
des brevets

**RAPPORT DE RECHERCHE EUROPEENNE**

**0165093**
Numéro de la demande

EP 85 40 0808

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | DE-A-3 207 432 (KWM) <br> * Figures; page 8, ligne 25 - page 10, ligne 5 * | 1,3,7 | B 27 N 3/28 <br> B 29 C 47/10 <br> B 29 C 47/40 <br> B 29 C 47/64 // <br> B 29 K 103/00 |
| | --- | | |
| Y | EP-A-0 087 699 (AUTOMATIK APPARATE-MASCHINENBAU H. HENCH) | 1,3,7 | |
| | --- | | |
| A | FR-A-2 380 857 (DYNAMIT NOBEL) <br> * Figure 2; page 6, lignes 12-39 * | 1,2,5 | |
| | --- | | |
| A | FR-A-1 442 473 (COMP. DES ATELIERS ET FORGES DE LA LOIRE) <br> * Figures 1,2 * | 3 | |
| | --- | | |
| A | EP-A-0 058 101 (CREUSOT-LOIRE) <br> * En entier * | 3 | DOMAINES TECHNIQUES RECHERCHES (Int. Cl.4) |
| | --- | | |
| A | FR-A-2 200 112 (BRÄUNING) <br> * Page 2, lignes 28-38; figures 1-5 * | 7,8 | B 29 C 47/00 <br> B 27 N 3/00 <br> B 01 F 7/00 |
| | ----- | | |

Le présent rapport de recherche a été établi pour toutes les revendications

| Lieu de la recherche | Date d'achèvement de la recherche | Examinateur |
|---|---|---|
| LA HAYE | 06-08-1985 | KUSARDY R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant